# EUROPÄISCHE PATENTSCHRIFT

(11) **EP 1 143 082 B1**
(45) Veröffentlichungstag und Bekanntmachung des Hinweises auf die Patenterteilung: **18.01.2006**
(21) Anmeldenummer: 01108642.8
(22) Anmeldetag: 05.04.2001
(51) Int. Cl.: E04B 1/74, E04C 2/16, E04B 1/88

(54) **Seegras-Dämmstoff-Bauelement**
Sea grass insulation element
Elément isolant en varech

(30) Priorität: 06.04.2000 DE 10017202
(43) Veröffentlichungstag der Anmeldung: 10.10.2001
(73) Patentinhaber: Fasa Gmbh, 09131 Chemnitz (DE)
(72) Erfinder: Melzer, Dieter Dr.-Ing., 09599 Freiberg (DE); Schulle, Wolfgang Prof. Dr., 09599 Freiberg (DE); Hintzen, Ullrich Dipl.-Ing., 09577 Niederwiesen OT Braunsdorf (DE)
(74) Vertreter: Naefe, Jan Robert

(56) Entgegenhaltungen:
- EP-A- 1 099 806
- DE-A- 3 625 405
- DE-A- 4 333 758
- DE-A- 4 402 912
- GB-A- 440 443

## Beschreibung

Die Erfindung betrifft ein Bauelement auf der Basis von Seegras zur Wärme- und/oder Schallisolierung. Andere Ein derartiges Bauelement ist in der GB-A-440443 beschrieben. Bauelemente sind in DE-PS 39 25 094 auf Basis von Altpapier/Pappe. in DE-PS 42 26 342 auf Basis von Schafwolle, in DE-PS 42 18 549 auf Basis von Altrohstoffen und in DE-OS 43 17 239 auf Basis von Stroh und Holzwolle beschrieben.

Die Vorteile der Erfindung liegen zum einen in der Verwendung eines nachwachsenden Rohstoffes mit cxzcllertt ausgebildeter "Faserbahnenstruktur" mit hoher Reißfestigkeit. Die Faserlänge und Breite ermöglicht einen stabileren Verbund als dies bei den herkömmlichen Werkstoffen möglich ist.

Weiterer Vorteil ist die Feuerhemmung bzw. Feuerbeständigkeit, eine ganz wesentliche Eigenschaft eines Baustoffes für den Baustoffsektor, der durch den NaCl-Gehalt und Zuschlagstoffe gewährleistet.

Durch erhöhte Rohdichten entstehen Wcrkstoffc mit konstruktiven Eigcnschattcn, bei glcichzcitig guten Wärme- und Schalldämmeigenschaften.

Durch den orientierten Fasereinbau ist die Wärmeleilfähigkeit senkrecht zur Faser- und Nutzrichtung vergleichsweise sehr niedrig.

Das Seegras-Dämmstoff-Bauclement ist langzcitverrottungsfest und löst sich nicht wie Papier oder Altrohstoffe durch biologische Zersetzung auf.

Des weiteren gewährleistet eingelagertcs oder natürüch angclagertcs NaCl eine begrenzte Pcuchteaufnahmc, die reversibel ist und somit einen Feuchteausgleich im Raumklima bewirkt.

Der Erfindung liegt die Aufgabe zugrunde, ein Bauelement aus Seegras auszubilden, das vorzugsweise in den Mittelmocr-Anrainem in der Bauindustric zur Wärme- und Schallisolierung und Raumgestaltung verwendct werden kann.

Diese Aufgabe wird durch den kennzeichnenden Teil des Hauptanspruchs gelöst.

Das Bauelement bestcht überwiegend aus Seegras und wird durch Bindemittel und Zuschlagstoffe zu Platten, Matten oder Blöcken konfektioniert.

Als Bindemittel werden sowohl anorganische Stoffe wie Gips, kolloidales SiO₂-Al₂O₃, Kalk, Zement. Phosphat, Wasserglas als auch organische wie Zellulose, Tylosen und Kunstharzbinder verwendet. Als Zuschlagstoffe kommen Sand und Mineralien wie Ton, Lehm und Schiefer zum Einsatz.

Die erfindungsgemäßen Bauelemente zeichnen sich dadurch aus, daß sie wärmedämmend, schalldämmend, z. T. konstruktiv und feuerhemmend sind Letzte Eigenschaft insbesondere wegen des hohen Kochsalzgehalts des Seegras, der Bindemittel. Zuschlagstoffe und Füllstoffe.

**Werkstoffeigenschaften**

| Seegras | Bindemittel | Zuschlagsstoff | Dichte | KDF | ZFK |
|---|---|---|---|---|---|
| 50 % | 10 % | 40 % | 1,05 g1,0/m³ | 1,0 N/m² | 1,15 N/mm² |
| 70% | 20 % | 10 % | 0,55 g/m³ | nicht meßbar < 0,5 N/m² | 1,3 N/mm² |
| 30% | 5 % | 55 % | 1,2 g/m³ | 2,5 N/m² | 1, 8 N/mm² |

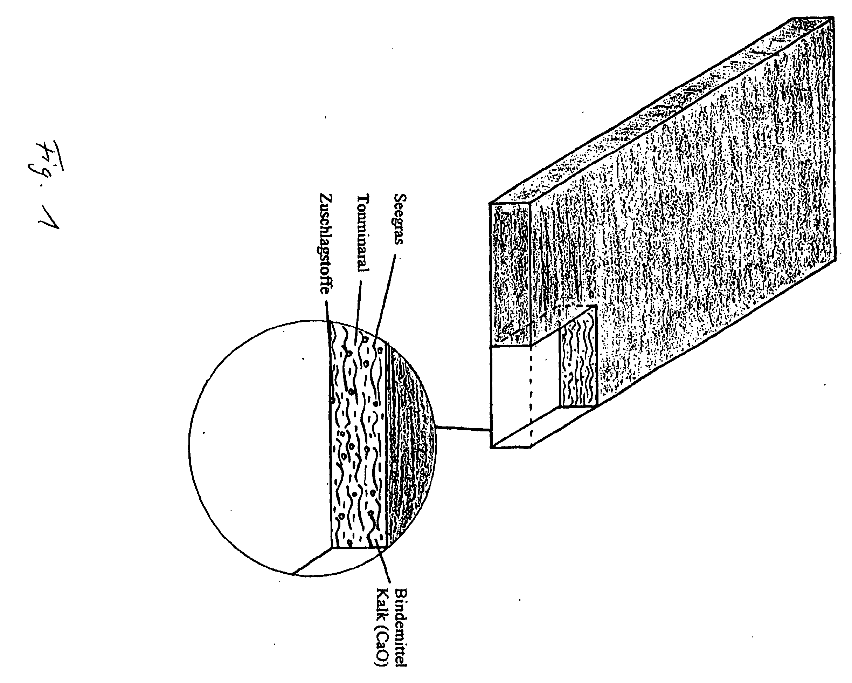

## Patentansprüche

1. Seegras-Dämmstoff-Bauelement, bestehend aus miteinander vermischten und zu Bauelementen konfektionierten Komponenten, wobei die miteinander vermischten Komponenten Seegras, Bindemittel und Zuschlagstoffe sind, **dadurch gekennzeichnet, daß** der Seegrasanteil im konfektionierten Bauelement zwischen 20 und 95 Gewichts- % beträgt und daß das eingesetzte Seegras bis zu 10 Gewichts-% NaCl aufweist.

2. Seegras-Dämmstoff-Bauelement nach dem Anspruch 1, **dadurch gekennzeichnet, daß** der NaCl- Anteil an der Oberfläche der einzelnen Fasern des eingesetzten Seegrases angeordnet ist.

3. Seegras-Dämmstoff-Bauelement nach einem der Ansprüche 1 und 2, **dadurch gekennzeichnet, daß** das eingesetzte Bindemittel aus Gips, Kalk und Zement oder aus Mischungen dieser Stoffe besteht.

4. Seegras-Dämmstoff-Bauelement nach einem der Ansprüche 1 bis 3, **dadurch gekennzeichnet, daß** das eingesetzte Bindemittel aus anorganischen Präparaten, wie Polyphosphaten, Wasserglas, und/oder aus organischen Präparaten, wie Zellulose und Kunstharzbinder, besteht.

5. Seegras-Dämmstoff-Bauelement nach einem der Ansprüche 1 bis 4, **dadurch gekennzeichnet, daß** die eingesetzten Zuschlagstoffe aus Sand, Ton, Tonerden, Lehm und/oder Schiefer bestehen.

6. Seegras-Dämmstoff-Bauelement nach einem der Ansprüche 1 bis 5, **dadurch gekennzeichnet, daß** das Seegras in mittels Flieslegeverfahren unter Einsatz von Fäden und Schnüren vernadelter Form eingesetzt ist.

7. Seegras-Dämmstoff-Bauelement nach einem der Ansprüche 1 bis 6, **dadurch gekennzeichnet, daß** das Bauelement eine platten-, matten-, schnur- oder blockförmige Form aufweist.

8. Seegras-Dämmstoff-Bauelement nach einem der Ansprüche 1 bis 6, **dadurch gekennzeichnet, daß** das Bauelement aus einer losen Schüttung oder Packung besteht.

## Claims

1. Seagrass construction element for insulation purposes, consisting of components which are mixed with one another and fabricated to form construction elements, wherein the components which are mixed with one another are seagrass, binder and aggregate, **characterized in that** the amount of seagrass in the fabricated construction element is between 20 and 95% by weight and **in that** the seagrass used comprises up to 10% by weight of NaCl.

2. Seagrass construction element for insulation purposes according to Claim 1, **characterized in that** the NaCl is arranged on the surface of the individual fibres of the seagrass used.

3. Seagrass construction element for insulation purposes according to either of Claims 1 and 2, **characterized in that** the binder used consists of gypsum, lime and cement or of mixtures of these substances.

4. Seagrass construction element for insulation purposes according to one of Claims 1 to 3, **characterized in that** the binder used consists of inorganic preparations, such as polyphosphates or water glass, and/or of organic preparations, such as cellulose and synthetic resin binder.

5. Seagrass construction element for insulation purposes according to one of Claims 1 to 4, **characterized in that** the aggregate used consists of sand, clay, alumina, loam and/or shale.

6. Seagrass construction element for insulation purposes according to one of Claims 1 to 5, **characterized in that** the seagrass is used in a form needled, by means of a tiling technique using threads and cords.

7. Seagrass construction element for insulation purposes according to one of Claims 1 to 6, **characterized in that** the construction element is in the form of a panel, mat, cord or block.

8. Seagrass construction element for insulation purposes according to one of Claims 1 to 6, **characterized in that** the construction element consists of bulk good or packing.

## Revendications

1. Elément de construction isolant en varech, comprenant des composants mélangés entre eux et confectionnés en éléments de construction, les composants mélangés entre eux étant du varech, du liant et des granulats, **caractérisé en ce que** la proportion de varech dans l'élément de construction confectionné représente entre 20 et 95 % de poids et **en ce que** le varech utilisé présente jusqu'à 10 % du poids de NaCl.

2. Elément de construction isolant en varech selon la revendication 1, **caractérisé en ce que** la proportion de NaCl est disposée sur la surface des fibres individuelles du varech utilisé.

3. Elément de construction isolant en varech selon l'une quelconque des revendications 1 et 2, **caractérisé en ce que** le liant utilisé est à base de gypse, chaux et ciment ou à base des mélanges de ces produits.

4. Elément de construction isolant en varech selon l'une quelconque des revendications 1 à 3, **caractérisé en ce que** le liant utilisé est à base de préparations inorganiques comme des polyphosphates, du silicate et/ou de préparations organiques, comme la cellulose et le liant à base de résine synthétique.

5. Elément de construction isolant en varech selon l'une quelconque des revendications 1 à 4, **caractérisé en ce que** les granulats utilisés sont à base de sable, d'argile, d'alumine, de glaise et/ou d'ardoise.

6. Elément de construction isolant en varech selon l'une quelconque des revendications 1 à 5, **caractérisé en ce que** le varech est utilisé dans une forme aiguilletée au moyen d'un procédé de pose de carrelage avec l'utilisation de fils et de ficelles.

7. Elément de construction isolant en varech selon l'une quelconque des revendications 1 à 6, **caractérisé en ce que** l'élément de construction présente une forme de plaque, de tapis, de ficelle ou de bloc.

8. Elément de construction isolant en varech selon l'une quelconque des revendications 1 à 6, **caractérisé en ce que** l'élément de construction est à base d'un remblai en vrac ou d'un bourrage.
